## Europäisches Patentamt
## European Patent Office
## Office européen des brevets

(11) Veröffentlichungsnummer: **0 018 558**
A2

(12) EUROPÄISCHE PATENTANMELDUNG

(21) Anmeldenummer: 80102092.6

(22) Anmeldetag: 18.04.80

(51) Int. Cl.³: **C 08 F 292/00**
C 09 C 3/10, C 08 F 2/44

(30) Priorität: 27.04.79 DE 2917272

(43) Veröffentlichungstag der Anmeldung:
12.11.80 Patentblatt 80.23

(84) Benannte Vertragsstaaten:
DE FR GB IT

(71) Anmelder: BAYER AG
ZENTRALBEREICH PATENTE, MARKEN UND LIZENZEN
D-5090 LEVERKUSEN 1, BAYERWERK(DE)

(72) Erfinder: von Bonin, Wulf, Dr.
Mendelssohnstrasse 30
D-5090 Leverkusen(DE)

(72) Erfinder: Striegler, Hellmut, Dr.
Friedrich-Bayer-Strasse 12
D-5090 Leverkusen(DE)

(54) Verfahren zur lösungsmittelfreien Herstellung von hydrophilen Füllstoffpulvern.

(57) Verfahren zur Herstellung von Polymerisaten olefinisch ungesättigter Carbonsäuren in einer als hydrophile Füllstoffe geeigneten Form, in dem man unter Durchmischung einen inerten pulverförmigen Trägerstoff mit monomeren olefinisch ungesättigten Carbonsäuren und gegebenenfalls weiteren ethylenisch ungesättigten Monomeren belädt und die noch rieselfähige Mischung an radikalischen Initiatoren polymerisiert.

EP 0 018 558 A2

0018558

- 1 -

BAYER AKTIENGESELLSCHAFT          5090 Leverkusen, Bayerwerk
Zentralbereich                    G/Rz
Patente, Marken und Lizenzen

Verfahren zur lösungsmittelfreien Herstellung
von hydrophilen Füllstoffpulvern

Die Erfindung betrifft die Herstellung von hydrophilen
Füllstoffen auf Basis von gegebenenfalls vernetzten (Co)
Polymerisaten ungesättigter Carbonsäuren ohne Lösungsmittel durch Polymerisation in Pulverform auf einer Trägersubstanz.

Die Verfahrensprodukte sind insbesonders in Form ihrer
Ammonium- und/oder Alkalisalze hervorragende hydrophile
Füllstoffe für die Kunstlederherstellung, den Hygienesektor, die Medizin oder die Textilausrüstung.

Die Verwendung von gegebenenfalls vernetzten (Co)Polymerisaten von ungesättigten Carbonsäuren bzw. ihrer Salze als
hydrophile Füllstoffe oder Verdicker ist bekannt.

Diese (Co)Polymerisate wurden bisher jedoch durch Fällungs-
oder Lösungspolymerisation in Lösungsmitteln hergestellt, da
nur so die relativ große Polymerisationswärme zuverlässig
reproduzierbar abgeführt werden konnte. Dies ist nötig,
um unkontrollierte Vernetzung zu verhindern, um gleichbleibende Polymerisationseigenschaften zu erhalten und um

Le A 19 614 - Europa

BAD ORIGINAL

- 2 -

Gefahren bei der Polymerisation zu vermeiden, vergl. z.B. DE-OS 2 330 644.

Lösungs- oder Dispersionsmittel müssen durch den Produktionsprozess geschleppt werden, erfordern zusätzliche Sicherheitsmaßnahmen und Operationen zur Entfernung und Aufarbeitung.

Es bestand daher ein Bedürfnis nach einem Verfahren, das die Herstellung solcher (Co)Polymerisate ohne Lösungsmittel ermöglicht.

Gegenstand der Erfindung ist ein Verfahren zur Herstellung von Polymerisaten olefinisch ungesättigter Carbonsäuren in einer als hydrophile Füllstoffe geeigneten Form, das d a d u r c h g e k e n n z e i c h n e t ist, daß man unter Durchmischung einen inerten pulverförmigen Trägerstoff mit monomeren olefinisch ungesättigten Carbonsäuren und gegebenenfalls weiteren ethylenisch ungesättigten Monomeren belädt, und die noch rieselfähige Mischung mit radikalischen Initiatoren polymerisiert.

Der Vorgang kann ein oder mehrmals wiederholt werden, d. h., das pulverförmige Reaktionsprodukt aus neugebildetem Polymerisat und pulverförmigem Trägerstoff kann erneut mit Monomeren beladen und an radikalischen Initiatoren polymerisiert werden.

Überraschenderweise gestattet dieses Verfahren, aus ungesättigten Carbonsäuren, z.B. Acrylsäure, vernetzte und als hydrophile Füllstoffe verwendbare Endprodukte zu erhalten, auch bei Abwesenheit eines vernetzenden Monomeren. Als pulverförmige Trägerstoffe haben sich übliche pyrogene und durch Fällung erhaltene Kieselsäuren bewährt. Es eignen sich aber auch andere inerte und unlösliche anorga-

Le A 19 614

- 3 -

nische und organische Pulver, z.B. Sand, Gips, Mehl, Talkum, Gesteinsmehl, Asbest, Glimmer, Kohlenstoff, Stärke, Cellulose, Holzmehl, Polyacrylnitril, vernetzte Styrolcopolymerisate, sowie die Verfahrensprodukte selbst.

Als olefinisch ungesättigte, radikalisch polymerisierbare Carbonsäuren sind beispielhaft zu nennen Methacrylsäure, Crotonsäure, Ithakonsäure, Maleinsäure vor allem in Form der Anhydride, Fumarsäure, sowie Halbester und Halbamide von Fumar- und Maleinsäure oder auch Carbonsäuregruppen enthaltende Ester und Amide der (Meth)Acrylsäure, bevorzugtermaßen wird jedoch Acrylsäure eingesetzt. Die ungesättigten Carbonsäuren können auch im Gemisch Verwendung finden.

Als Comonomere finden z.B. neben insbesonders Styrol, Vinylacetat, auch Ethylen, Isobuten, Diisobuten, Butadien, Isopren, Vinylchlorid, Vinylpyrrolidon, Vinylacetamid und den Estern der (Meth)Acrylsäure mit Methanol, Ethanol, Propanol, den Butanolisomeren, Cyclohexanol oder Polyetheralkoholen, (Meth)Acrylnitril, Maleinimide, vor allem auch vernetzende Comonomere Verwendung, wie z.B. (Meth)Acrylamid. N-Methylol-(Meth)Acrylamid oder dessen Methyl- bzw. Alkylether, bzw. Hydroxyethyl- oder -propyl (Meth)Acrylat.

Die weniger vernetzenden Comonomeren können von 0 bis zu ca. 75 Gew.-%, bevorzugt 5 - 35 Gew.-%, in der Monomeren- haltigen Polymerisationsmischung enthalten sein, während die vernetzenden Monomeren vorteilhaft in Mengen unter 10 Gew.-%, vorzugsweise von 0 bis 6 Gew.-%, verwendet werden.

Die verschiedenen Monomeren können auch im Gemisch miteinander verwendet werden; obgleich das erfindungsgemäße Verfahren prinzipiell lösungsmittelfrei arbeitet, ist es natürlich möglich, für spezielle Zwecke auch Lösungsmittel

Le A 19 614

oder sonstige flüssige oder feste Zusätze mitzuverwenden, wie etwa Weichmacher, z.B. Glyzerin, nicht polymerisationsfähige Vernetzer, vorgefertigte Polymere, Wasser oder wäßrige Lösungen. Im allgemeinen werden diese Zusätze jedoch in untergeordneten Gewichtsmengen unter 50 Gew.-% in Betracht kommen, insbesondere unter 30 Gew.-%, bezogen auf Gesamtgewicht des Reaktionsproduktes.

Die Radikalinitiatoren zur Auslösung der Polymerisationsreaktion sind z.B. die dem Stand der Technik entsprechenden Typen, etwa Peroxide, wie tert.-Butylperoktoat oder Azotypen, wie Azodiisobutyronitril, Persulfate, Silylethertypen, Redoxsysteme oder Photoinitiatoren. Sie werden auch in üblichen Mengen zwischen z.B. 0,05 und 3 Gew.-% bzw. auf Monomeres eingesetzt. Sie werden dem Monomeren zugemischt oder getrennt davon eindosiert. In Einzelfällen kann die Polymerisation auch thermisch oder durch Bestrahlung ausgelöst werden.

Die Polymerisationstemperaturen liegen bei 30 - 220°C, vorzugsweise bei 75 - 180°C. Es ist vorteilhaft, aber nicht zwingend, unter Inertgas, z.B. Stickstoff, zu polymerisieren.

Das Verhältnis von Trägersubstanz zu Monomeren bzw. Polymerisat ändert sich im Verlaufe des Herstellungsprozesses. Im Endprodukt kann das Gewichtsverhältnis von Trägersubstanz zu Polymerisat von 1 : 0,1 bis zu weniger als 1 : 20, vorzugsweise 1 : 2 bis 1 : 6 betragen. Generell gilt, daß zu Beginn der Reaktion und natürlich späterhin auch die Rieselfähigkeit der Mischung aus Trägersubstanz, Polymer und Monomeren gewährleistet sein soll. Wieviel Monomeres bzw. flüssiges Polymerisationsgemisch primär einer gegebenen Menge an vorgelegtem Trägerpulver zugesetzt werden

Le A 19 614

- 5 -

kann, richtet sich nach der Art des Trägers, kann jedoch leicht ausprobiert werden. Z.B. kann 50 Teilen einer gefällten Kieselsäure etwa die gleiche Gewichtsmenge an Acrylsäure zugesetzt werden, ohne daß die Rieselfähigkeit der Mischung verlorengeht. Natürlich wird man im Anwendungsfalle zumeist eine geringere als die als maximal mögliche erkannte Monomerenmenge primär einsetzen, im genannten Falle etwa 10 - 50 % der Maximalmenge, obgleich es durchaus möglich ist, auch mit höheren Anfangsmengen zu arbeiten.

Obgleich es eine weniger bevorzugte Ausführungsform ist, kann auch noch während der Polymerisation weiteres Trägermaterial dem Reaktionsraum zugeführt werden, z.B. bei kontinuierlichem Arbeiten, wenn man ein konstantes Verhältnis von Trägermaterial zu Polymerisat einhalten will oder die Rieselfähigkeit des Reaktionsgutes verbessert werden soll. Im allgemeinen kann aber auf weitere Zusätze an Trägersubstanz verzichtet werden. Der Reaktionsraum soll gut durchmischt sein. Es kann sich um ein Wirbelbett handeln, der Durchmischungsprozess kann durch einen Rührer oder eine kugelmühlen- oder drehrohrähnliche Vorrichtung erfolgen. Von besonderem Interesse sind Geräte, bei denen neben dem Vermischungseffekt auch ein Zerkleinerungseffekt, z.B. durch Prallkörper, wie Kugeln oder Schlagstangen, herbeigeführt wird.

Die Verfahrensprodukte werden zur Erhöhung ihres hydrophilen Charakters vorzugsweise in Ammonium- oder Alkali-, z.B. Natrium- oder Kaliumsalze überführt. Auch die Umsetzung mit Erdalkalien sowie primären, sekundären oder tertiären Aminen, Z.B. Triethanolamin, zu Salzen oder mit Alkoholen zu Estern ist möglich.

Die Salzbildung kann ebenfalls, oft im gleichen Reaktionsgefäß, lösungsmittelfrei vorgenommen werden, z.B., indem man mit den Alkalihydroxiden, Carbonaten oder Bicarbonaten

Le A 19 614

intensiv vermischt. Besonders einfach gestaltet sich die Ammoniumsalzbildung durch Beaufschlagung des Reaktionsproduktes mit Ammoniakgas. Die Salzbildung kann stöchiometrisch vollständig oder unvollständig durchgeführt werden, je nach gewünschtem Hydrophilierungsgrad.

Die Verfahrensprodukte dienen zur Hydrophilierung von Kunstleder, indem man sie in Polymerisate oder Vliese einarbeitet, oder sie gegebenenfalls mit Bindemitteln zu Beschichtungszwecken verwendet. Sie finden als Dispergierhilfen und Verdicker Anwendung, zum Aufsaugen von Pflanzenschutzstoffen oder von Flüssigkeiten im medizinischen, hygienischen oder technischen Bereich, als Trockenmittel oder Zusätze zu Pulvern und Pudern, Kosmetika-, Nahrungsmittel-, Farbstoff- und Pigmentformulierungen, oder als Hilfsmittel zur Verbesserung der Feuchtigkeitsaufnahme von Windeln, Binden jeglicher Art, der Streu in der Tierhaltung, sowie zur Bodenverbesserung im Gartenbau bzw. Landwirtschaft.

Die Verfahrensprodukte können durch Extraktion, z.B. mit Ethanol, von Verunreinigungen leicht befreit werden.

Im folgenden sind Teile Gewichtsteile und Prozente Gewichtsprozente.

Beispiel 1

In einem 1,5-1-Kolben werden ca. 500 Teile Glaskugeln mit ca. 5 mm Durchmesser eingefüllt und mit einem Rührer gut gerührt. Dann setzt man hinzu 50 Teile Kieselsäure Typ K 322 (Degussa) und eine Lösung von 0,4 Teilen Azodiisobutyronitril und 0,2 Teilen tert.-Butylperoctoat in 50 Teilen eines Gemisches aus 20 % Methacrylsäure und 80 % Acrylsäure. Es entsteht eine pulverige Reaktionsmischung, die unter

Le A 19 614

- 7 -

gutem Durchmischen auf 75°C erhitzt wird. Die Polymerisation setzt nach ca. 10 Min. ein, dann rührt man noch 30 Min. und setzt dann nochmals die gleiche Reaktionslösung hinzu und polymerisiert abermals, anschließend wird diese Operation nochmals wiederholt. dann wird die entstandene pulverige Reaktionsmasse 1 Stunde bei ca. 160°C nachgeheizt, wobei sie völlig auspolymerisiert. Dann wird eine Probe entnommen: sie stellt ein pulveriges Produkt dar, das nach Zusatz von überschüssiger 1%iger NaOH, KOH oder $NH_4OH$ sich nicht auflöst, sondern lediglich stark aufquillt, wobei gewichtsmäßige Wasseraufnahmen von über 1000 % erreicht werden.

Beispiel 2

50 Teile handelsübliche gefällte Kieselsäure werden in der nach Beispiel 1 benutzten Apparatur mit 25 Teilen einer Lösung aus 48 Teilen Acrylsäure, 1 Teil Acrylamid-N-methylolmethylether, 1 Teil Acrylamid, 0,4 Teilen Azodiisobutyronitril, 0,1 Teil tert.-Butylperoctoat versetzt und unter gutem Durchmischen bei einer Badtemperatur von 80°C 1 Std. polymerisiert, dann wiederholt man den Zusatz der Monomerenmischung noch achtmal. Zuletzt wird eine Stunde bei 95°C nachpolymerisiert. Dann setzt man bei 60°C 260 Tle $NaHCO_3$ in fein gepulverter Form hinzu, rührt 1 Std. bei 80°C, bei 90°, 100°C, 110°C und 3 Stunden bei 120°C. Hierbei bildet sich das Na-Salz des Polymerisates. Nach Zusatz von Wasser quillt das Pulver stark auf und hat bei Gewichtsbestimmung, nachdem überschüssiges Wasser auf einem Faltenfilter abgelaufen ist, eine Wasseraufnahme von ca. 1800 %.

Beispiel 3

In einem beheizbaren horizontalen Schaufeltrockner aus V2A-Stahl, der mit Schlagstangen ausgerüstet ist ("Venu-

Le A 19 614

- 8 -

leth") werden 50 Teile Kieselsäure Siperit 22$^{(R)}$/Degussa mit 25 Teilen der Reaktionslösung gemäß Beispiel 2 vermischt. Dann wird die pulverige Mischung auf ca.80°C erhitzt. Sobald die Polymerisation einsetzt, werden im Verlaufe von 5 Stunden kontinuierlich weitere 380 Teile Reaktionslösung in den gut gerührten Reaktionsraum eindosiert, wobei die Temperatur zwischen 80 und 120°C gehalten wird. Dann wird noch 2 Stunden bei ca. 100°C nachpolymerisiert. Anschließend wird bei ca. 40°C der Reaktionsraum unter gutem Rühren mit NH$_3$-Gas beschickt. Abschließend wird noch 12 Stunden bei Raumtemperatur unter Ammoniakatmosphäre gerührt und dann restliches NH$_3$ durch Spülen mit Stickstoff entfernt. Man erhält ein pulveriges Hydrophiliermittel, das ca. 1600 % Wasser aufnimmt.

Die gemäß den vorangegangenen Beispielen erhältlichen polymeren Salze haben folgende Wasserdampfaufnahmefähigkeiten (gemessen als Differenzbetrag zwischen 45 % und 85 % rel. Luftfeuchtigkeit):

Beispiel 1, K-Salz : 39 %
Beispiel 2, Na-Salz : 48 %
Beispiel 3, NH$_4$-Salz : 60 %

Sie sind daher nach Einarbeitung in Syntheselederbasisvliese gut geeignet, deren Wasserdampfaufnahmevermögen dem des Naturleders anzugleichen.

Da die Salze hervorragend, z.B. mit Ethanol, extrahiert werden können, lassen sie sich auch physiologisch einwandfrei einstellen und können als Verdicker für Nahrungsmittel, Kosmetika oder medizinische Präparate oder Absorptionsmittel in Textilien, Vliesen, Pudern, Windeln, Binden usw. Verwendung finden.

Le A 19 614

Beispiel 4

In dem gemäß Beispiel 3 benutzten Schaufeltrockner werden 50 Teile Kieselsäurefüllstoff eingefüllt, dann erhitzt man auf 80°C und dosiert getrennt und gleichzeitig im Laufe von 9 Stunden unter gutem Durchmischen in den Apparat hinein eine Lösung von 1,62 Teilen Azodiisobutyronitril und 0,8 Teilen Benzoylperoxid in 162 Teilen Styrol, sowie 150 Teile geschmolzenes Maleinanhydrid. Dann läßt man die während der Dosierungsphase rieselfähig gebliebene und bei 80 - 120°C gehaltene Reaktionsmischung noch 3 Stunden nachpolymerisieren. Dann wird das pulverige Reaktionsprodukt abgefüllt. Es handelt sich um ein in verdünnter wäßriger Ammoniaklösung lösliches Copolymerisat. Im Gemisch mit $SiO_2$ kann dieses als Hilfsmittel für Pigmentfarben oder als Dispergiermittel verwendet werden.

Le A 19 614

- 10 -

Patentansprüche:

1. Verfahren zur Herstellung von Polymerisaten olefinisch ungesättigter Carbonsäuren in einer als hydrophile Füllstoffe geeigneten Form, d a d u r c h   g e - k e n n z e i c h n e t , daß man unter Durchmischung einen inerten pulverförmigen Trägerstoff mit monomeren olefinisch ungesättigten Carbonsäuren und gegebenenfalls weiteren ethylenisch ungesättigten Monomeren belädt und die noch rieselfähige Mischung an radikalischen Initiatoren polymerisiert.

2. Verfahren nach Anspruch 1, d a d u r c h   g e k e n n - z e i c h n e t , daß das Polymerisat des Anspruchs 1 erneut mit den Monomeren des Anspruchs 1 beladen und erneut an radikalischen Initiatoren polymerisiert wird.

3. Verfahren nach Anspruch 1, d a d u r c h   g e k e n n - z e i c h n e t , daß als pulverförmiger Trägerstoff Kieselsäure verwendet wird.

4. Verfahren nach Anspruch 1, d a d u r c h   g e k e n n - z e i c h n e t , daß als olefinisch ungesättigte Carbonsäure Acrylsäure, Methacrylsäure, Maleinsäureanhydrid oder Mischungen davon verwendet werden.

Le A 19 614